# EUROPEAN PATENT SPECIFICATION

(11) **EP 1 201 119 B1**
(45) Date of publication and mention of the grant of the patent: **20.09.2006**
(21) Application number: 01123707.0
(22) Date of filing: 04.10.2001
(51) Int. Cl.: A01K 1/00

(54) **Stable equipment system**
Stallausrüstung
Equipement d'étable

(30) Priority: 26.10.2000 DK 200001600
(43) Date of publication of application: 02.05.2002
(73) Proprietor: CHIMA A/S, 4300 Holbaek (DK)
(72) Inventor: Rasmussen, Henrik, 4500 Nykoebing Sjaelland (DK)
(74) Representative: Olsen, Peter Vestergaard

(56) References cited:
- EP-A- 1 059 027
- DE-B- 1 204 874
- GB-A- 699 123
- GB-A- 2 252 602
- US-A- 4 552 094

## Description

### Background of the Invention

The present invention concerns a stable equipment system for domestic animal boxes and pens, the sides and gates of which having at least one largely U-shaped edge section with two mutual parallel longitudinal members or flaps and which within itself may accommodate and secure wall elements and possible closing mechanism. Such systems are known from prior art where bars or planks are disposed horizontally between vertical edge sections so that the plank ends are accommodated between the longitudinal members in the edge sections and are secured with fittings, usually through-going rivets or screws. In gates of the kind described in DK-U3-1999 00009, the edge section accommodates a manoeuvring means for the closing mechanism of the gate which is provided with an operating handle at the top end of the edge section.

At the joints between edge section and wall elements, dirt may penetrate in between elements and section, also when using planks, as the longitudinal members of the section only fits closely to the planks where screws or rivets are situated. Between the fastening points, the members of the section will open up more or less, depending on the rigidity of the section material. Furthermore, due to its design the section itself is prone to collecting dirt from the stable environment. These corners in the wall or gate structure of the box/pen are difficult or impossible to clean, and this increases the risk of bacterial growth and infection between different and successive groups of domestic animals using the box or pen, a fact which, of course, is very undesirable.

A system according to the preamble of claim 1 is known from GB-A-2252602.

### Explanation of the Invention

The peculiar feature of the system according to the invention is the members so that the edges of the members are inclining towards each other, and that the system comprises filler elements for filling sections of the U-section which are not accommodating wall elements.

The particular filler elements according to the invention may thus eliminate possible open cavities between the longitudinal members in the U-shaped edge section. The mutually directed, inclining edges of the members will then resiliently force the members slightly away from each other when mounting a wall element or a filler element, and line contact will arise between the edges and the element. When the members then are clamped together around the elements at mutually spaced points along the members, the elasticity of the section material will compensate in the sections between the fastening points and maintain the line of contact between edges and element. The appearance of gaping apertures along the line of contact between the edge section and the wall elements or other element is thereby eliminated, and corners with dirt and bacteriae deposits are avoided.

In an embodiment of the invention, the system may comprise filler elements having apertures for receiving ends of wall elements in the form of bars. Spaces tending to collecting dirt between the bars in the edge section are thereby avoided, as the longitudinal bending of the edges of the members ensures an unbroken closed joint between members and filler elements.

Furthermore, the system according to the invention may comprise a filler element for a vertical edge section, where the element is provided with internal cavities and recesses for accommodating a closing mechanism which may be made according to prior art. In a further embodiment of the invention, the filler element is arranged for placing at the top of the vertically positioned edge section and is provided with a through-going opening at its upper end for fitting an operating rod for the closing mechanism.

### The Drawing

Embodiments of the stable equipment system according to the invention will now be described more closely with reference to the drawing, where:
- Fig. 1: is a perspective view of a part of a wall and a gate for a pig pen in which the equipment system according to the invention is used,
- Fig. 2: is a perspective end view of a part of a wall or gate as on Fig. 1,
- Fig. 3a and 3b: are two different sections through the edge section depicted on Fig. 2,
- Fig. 4: is a set of different filler elements for the system according to the invention, and
- Fig. 5: is a perspective view from below of two different edge sections on a wall and a gate, respectively, on Fig. 1.

### Description of Embodiments

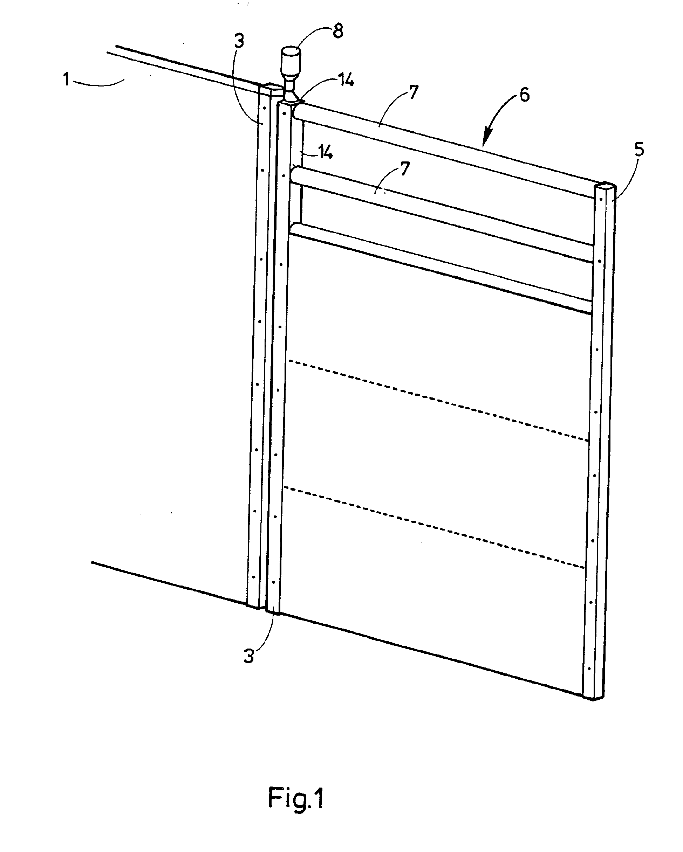

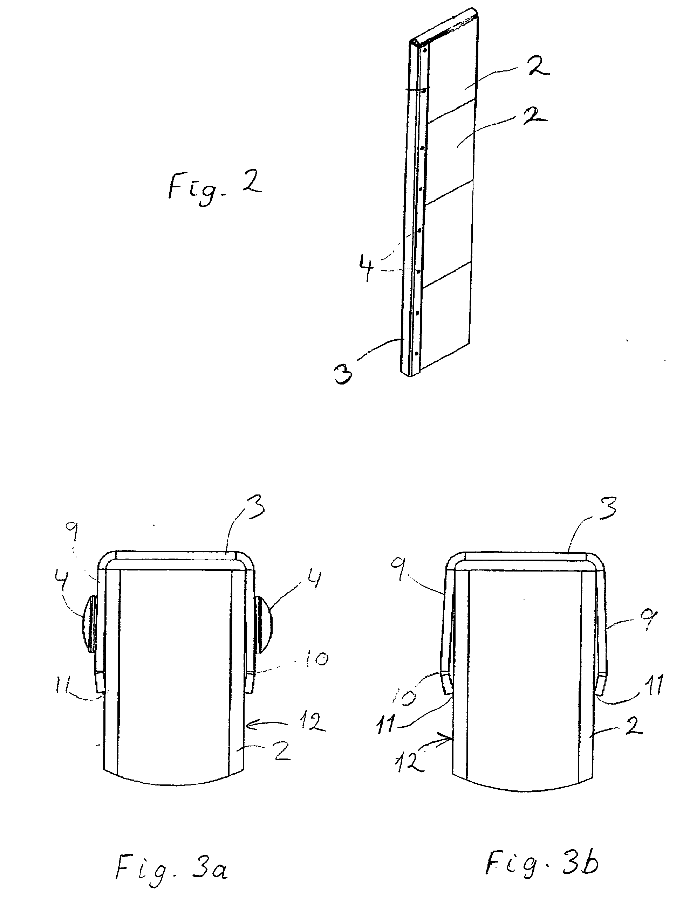

The stable equipment system according to the invention may, for example, find application in pig pens where side walls and gates in principle are made as shown on Figs. 1 and 2. The side wall 1 is built up from transverse plastic planks 2, which are fixed in vertical and largely U-shaped sections 3 by means of through-going screws 4. In a similar way, planks 2 in vertical edge sections 5 in a gate 6 are fixed which at the top is provided with tubular bars 7 extending between the sections 5. The sections 3 may also be used for forming edge in other places, e.g. along the top or bottom edges on the gate 6 and the side wall 1.

The gate 6 has an operating handle 8 at the top for manoeuvring a not shown closing mechanism which is let into one edge section 5 of the gate.

The edge sections 3 have, as shown in the sections on Figs. 3a and 3b, two flaps or longitudinal members 9 that are gripping around the ends of the planks 2. The sections 3 may be made of metal, plastic as well as composite materials. The outermost part of the sections are provided with a longitudinal bending 10 so that the free edge 11 of the members always is in line contact with the surface 12 of the planks. Where the screws 4 are clamping the flaps 9, there is also some surface contact between flap 9 and surface 12, whereas at other locations between the screw connections, as on Fig. 3b, there is only line contact between surface 12 and member edge 11. Thereby the opening that possibly would appear between plank 2 and member 9 is closed, and dirt collecting comers are thus not found here.

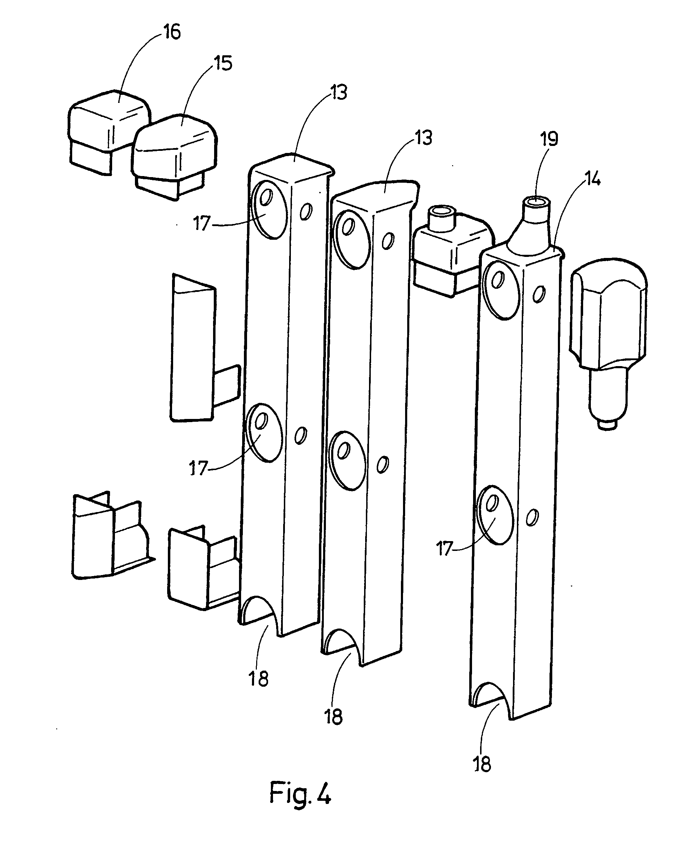

Filler elements designated 13, 14, 15, and 16 on Fig. 4 may form part of the equipment system. When using bars 7, the intermediate space or slot, which is formed by members 9 within the section 3 between the bars, may be filled up by an element 13,14 having apertures 17 and concave recess 18 for receiving ends of bars 7. The element 14 is arranged for also accommodating the closing mechanism (not shown) and has a through passage 19 for a not shown operating rod. Other filler elements 15 and 16 serve as top parts and bottom plugs for the sections 3. In all cases, the sections 3 can close tightly around the elements 13-16, thanks to the bending 10, and thus avoid dirt collecting and infection hazardous corners.

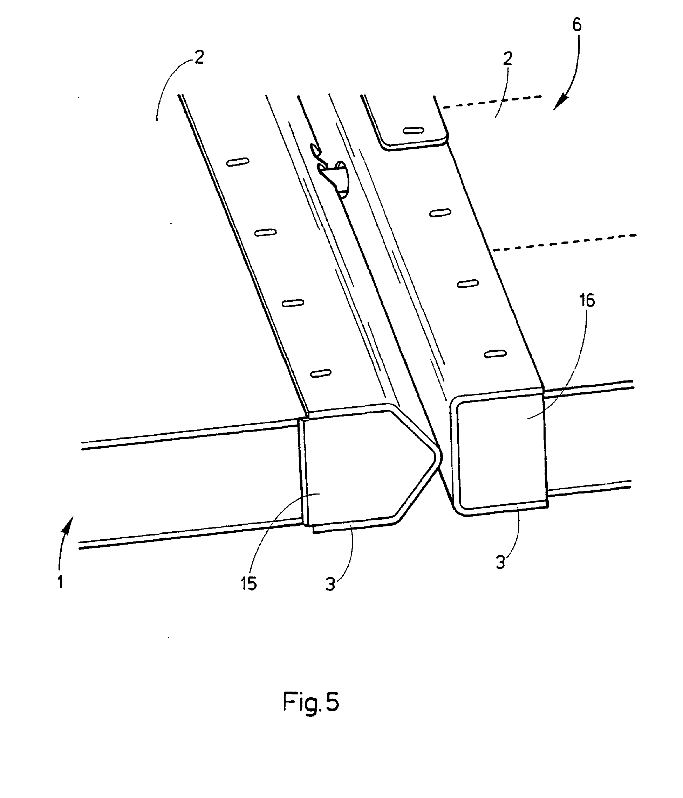

As shown in Fig. 5, the U-shape of the edge section 3 may be varied. Furthermore, the stable equipment system may be used with other domestic animals, e.g. cattle.

## Claims

1. A stable equipment system for domestic animal boxes and pens, the sides (1) and gates (6) of which having at least one largely U-shaped edge section (3;5) with two mutually parallel longitudinal members (9) and which within itself may accommodate and secure wall elements (2;7) and possible closing mechanism, wherein the members (9) each are provided with a longitudinal bending (10) in parallel with the longitudinal free edges (11) of the members (9) so that the edges (11) of the members are inclining towards each other, **characterised in that** the system comprises filler elements (13,14;15,16) for filling sections of the U-section (3;5) which are not accommodating wall elements (2).

2. A stable equipment system according to claim 1, wherein the system comprises filler elements (13,14) having apertures (17,18) for receiving ends of wall elements in the form of bars (7).

3. A stable equipment system according to claim 1 or 2, wherein the system comprises a filler element (14) for a vertical edge section (5), where the element is provided with internal cavities and recesses (19) for accommodating a closing mechanism.

4. A stable equipment system according to claim 3, wherein the filler element (14) is designed for placing at the top of the vertically positioned edge section (5) and is provided with a through-going opening (19) at its upper end for fitting an operating rod for the closing mechanism.

## Patentansprüche

1. Stallausrüstungssystem für Haustier-Boxen und -pferche, deren Seiten (1) und Gatter (6) wenigstens einen weitgehend U-förmigen Kantenabschnitt (3; 5) mit zwei zueinander parallelen longitudinalen Organen (9) besitzen, die zwischen sich Wandelemente (2; 7) und möglicherweise einen Schließmechanismus aufnehmen können, wobei die Organe (9) jeweils mit einer longitudinalen Biegung (10) parallel zu den longitudinalen freien Kanten (11) der Organe (9) versehen sind, so dass die Kanten (11) der Organe in Richtung zueinander geneigt sind, **dadurch gekennzeichnet, dass** das System Füllelemente (13, 14, 15, 16) aufweist, um Abschnitte des U-Abschnitts (3; 5), die keine Wandelemente (2) aufnehmen, zu füllen.

2. Stallausrüstungssystem nach Anspruch 1, wobei das System Füllelemente (13, 14) mit Öffnungen (17, 18) für die Aufnahme von Enden von Wandelementen in Form von Stäben (7) besitzt.

3. Stallausrüstungssystem nach Anspruch 1 oder 2, wobei das System ein Füllelement (14) für einen vertikalen Kantenabschnitt (5) aufweist, wobei das Element mit inneren Hohlräumen und Aussparungen (19) für die Aufnahme eines Schließmechanismus versehen ist.

4. Stallausrüstungssystem nach Anspruch 3, bei dem das Füllelement (14) so entworfen ist, dass es an der Oberseite des vertikal positionierten Kantenabschnitts (5) angeordnet werden kann, und mit einer Durchgangsöffnung (19) in seinem oberen Ende versehen ist, um einen Betätigungsstab für den Schließmechanismus einzusetzen.

## Revendications

1. Dispositif d'équipement d'une étable pour des box et enclos pour animaux domestiques, dont les côtés (1) et les portes (6) présentent au moins un profilé de bord (3 ; 5) principalement en forme de U, avec deux éléments longitudinaux (9) parallèles l'un à l'autre, le dispositif pouvant recevoir à l'intérieur de lui-même, et fixer des éléments de paroi (2 ; 7) et un éventuel mécanisme de fermeture, les éléments (9) présentant chacun un cintrage longitudinal (10) parallèle aux bords libres longitudinaux (11) des éléments (9) afin que les bords (11) des éléments soient inclinés l'un vers l'autre, **caractérisé en ce que** le dispositif comprend des éléments de remplissage (13, 14 ; 15, 16) pour remplir les parties du profilé en U (3 ; 5) qui ne reçoivent pas d'éléments de paroi (2).

2. Dispositif d'équipement d'une étable selon la revendication 1, dans lequel le dispositif comprend des éléments de remplissage (13, 14) présentant des ouvertures (17, 18) destinées à recevoir les extrémités des éléments de paroi sous la forme de barres (7).

3. Dispositif d'équipement d'une étable selon la revendication 1 ou 2, dans lequel le dispositif comprend un élément de remplissage (14) destiné à une section de bord verticale (5), l'élément étant pourvu de cavités et d'évidements internes (19) pour recevoir un mécanisme de fermeture.

4. Dispositif d'équipement d'une étable selon la revendication 3, dans lequel l'élément de remplissage (14) est conçu pour être placé au sommet de la section de bord (5) positionnée verticalement et est pourvu d'une ouverture (19) continue, à son extrémité supérieure, destinée à recevoir une tige de commande pour le mécanisme de fermeture.
